# EUROPEAN PATENT SPECIFICATION

(11) **EP 0 770 970 B1**
(45) Date of publication and mention of the grant of the patent: **08.03.2000**
(21) Application number: 96120633.1
(22) Date of filing: 24.04.1990
(51) Int. Cl.: G06K 7/10, G07G 1/12

(54) **Laser scanning system for reading bar codes**
Laser-Abtastsystem zum Lesen von Streifenkodierungen
Système de balayage à laser pour la lecture de codes à barres

(30) Priority: 01.05.1989 US 345881
(43) Date of publication of application: 02.05.1997
(62) Divisional of application: 90107787.5
(73) Proprietor: SYMBOL TECHNOLOGIES, INC., Holtsville, New York 11742-1300 (US)
(72) Inventor: Siemiatkowski, Bish, Los Gatos, CA 95030 (US)
(74) Representative: Wagner, Karl H., Dipl.-Ing.

(56) References cited:
- EP-A- 0 194 115
- EP-A- 0 262 943
- FR-A- 2 566 572
- US-A- 4 072 859
- US-A- 4 409 470
- US-A- 4 639 606
- US-A- 4 766 297

## Description

### BACKGROUND OF THE INVENTION

### 1. Field of the Invention

This invention generally relates to laser scanning systems for reading bar code symbols or similar indicia and, more particularly, to an arrangement including a hand-held laser scanning unit for generating a laser beam scan pattern over the symbols to be read, and a terminal unit for displaying and storing data transferred from the scanning unit.

### 2. Description of the Related Art

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, the bars and spaces having different light-reflecting characteristics. A number of different bar code standards or symbologies exist. These symbologies include UPC/EAN, Code 128, Codabar, and Interleaved 2 of 5. The readers and scanning systems electro-optically decode the symbol to multiple alphanumerical characters that are intended to be descriptive of the article or some characteristic thereof. Such characters are typically represented in digital form as an input to a data processing system for applications in point-of-sale processing, inventory control, and the like. Scanning systems of this general type have been disclosed, for example, in U.S. Patent Nos. 4,251,798; 4,360,798; 4,369,361; 4,387,297; 4,409,470 and 4,460,120, all of which have been assigned to the same assignee as the instant application.

As disclosed in some of the above patents, one embodiment of such a scanning system resides, inter alia, in an emitting a laser light beam from a hand-held, portable laser scanning head supported by a user, and aiming the head, and more particularly, the laser light beam, at a symbol to be read. The scanner functions by repetitively scanning the laser beam in a line across the symbol. A portion of the reflected laser light which is reflected off the symbol is detected, and electronic circuitry or software decodes the electrical signal into a digital representation of the data represented by the symbol scanned.

More specifically, a scanner includes a light source such as a gas laser or semiconductor laser that generates a light beam. The use of a semiconductor devices as the light source in scanner systems is especially desirable because of their small size, low cost and low power requirements. The light beam is optically modified, typically by a lens, to form a beam spot of a certain size. It is preferred that the beam spot size be approximately the same as the minimum width between regions of different light reflectivity, i.e., the bars and spaces of the symbol. The relative size of the bars and spaces is determined by the type of coding used, as is the actual size of the bars and spaces. The number of characters per inch represented by the bar code symbol is referred to as the density of the symbol.

The light beam is directed by the lens of similar optical components along a light path toward a target that includes a bar code symbol on the surface. A scanning component is also disposed in the light path. The scanning component may either sweep the beam spot across the symbol and trace a scan line across and past the symbol, or scan the field of view of the scanner or do both. A scanner also includes a sensor or photodetector. The photodetector has a field of view which extends across and slightly past the symbol and functions to detect light reflected from the symbol. The analog electrical signal from the photodetector is first typically converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

Laser scanners are not the only type of optical instrument capable of reading bar code symbols. Another type of optical reader is one which is operative being placed by the user in direct contact with the symbol to be read. Such readers typically incorporate detectors based upon charge coupled device (CCD) technology in which the size of the detector is larger than or substantially the same as the symbol to be read. Such scanners are lightweight and easy to use, but require substantially direct contact or placement of the reader on the symbol to enable the symbol to read. Such contact reading is a preferred mode of operation for some applications or as a matter of personal preference by the user. Contact or near contact reading may also be implemented in an appropriately designed laser scanner.

FR-A-2 566 572 relates to a contact-free command and connection apparatus for automated equipment, particularly of power tools. While contact-free power and data transmission is disclosed in this document, no rechargeable power supply, or battery, is shown or mentioned for the moveable element (portable unit). The inductive power supply only operates to supply the portable unit when placed appropriately next to the base unit. The base unit, in turn, does not comprise means for recharging a rechargeable power supply of said portable unit when said portable unit is placed in proximity to the base unit. Further, there is no indication whether and how the acquired signals or data are stored in the portable unit. The document is only concerned with the transmission of the acquired information. The inductive power supply of the portable unit is only used for providing power for the transmission of the data to the base unit.

EP-A-0 194 115 discloses a portable laser diode scanning head having a gun-type housing. According to one embodiment thereof, a local data storage means is mounted in the handle portion and stores multiple decoded signals which have been read. The stored decoded signals thereupon can be unloaded to the remote host computer. By providing the local data storage means, the use of a cable during the reading of the symbols can be eliminated. When the cable is eliminated during the reading of the symbols, a rechargeable battery pack assembly is detachably snap-mounted at the bottom of the handle portion of the housing. If the scanning head contains a local data storage means within the handle portion, the stored decoded signals from a plurality of readings thereupon may be unloaded in a remote host computer, the cable only being connected to unload the stored signal. The head can also be incorporated in a desk lop, stand-alone workstation.

### SUMMARY OF INVENTION

Briefly, and in general terms, the present invention provides a system for reading bar code symbols or the like, as set forth in claim 1. Preferred embodiments of the present invention are defined in the dependent claims.

The invention generally relates to laser scanner systems for reading indicia of different light reflectivity such as bar code symbols. More particularly, the present invention provides a system for reading symbols, including a portable scanner operative in a hand-held mode supported by a user for reading symbols, and in a fixed station mode in which the scanner is coupled to a terminal.

According to one embodiment of the invention, a laser-scan bar code reader is mounted in a hand-held unit operable in two modes. In one mode the hand-held unit is mounted in a fixed position in a terminal, in which case the data generated from the bar code reading operation is transferred immediately to the terminal and the reader is powered continuously from the terminal unit. In the other mode, the hand-held unit is separated from the terminal and held manually, in which case the data from bar code reading is stored in a local memory to be later transferred to the terminal when the hand-held unit is again inserted into the terminal. A battery in the hand-held unit is charged when the unit is mounted in the terminal, then powers the hand-held unit while operating remote from the terminal. The power for battery charging and the data transfer are accomplished without direct connections between the hand-held unit and the terminal.

The laser scanner in an embodiment of the present invention in the workstation mode is operable in two power levels. When in the stationary mode, inserted in the fixed terminal, the scanner is in a low level, short scan condition, in which case it can recognize a bar code symbol but cannot properly decode it; when a bar code is recognized the unit switches to the higher level condition whereby the scan line is longer and the laser power level is higher so a full decode is possible.

### BRIEF DESCRIPTION OF THE DRAWINGS

The novel features characteristic of the invention are set forth in the appended claims. The invention itself, however, as well as other features and advantages thereof, will be best understood by reference to a detailed description of a specific embodiment, when read in conjunction with the accompanying drawings, wherein:
Fig. 1a is a perspective view of a hand-held laser scanner unit coupled to the terminal unit in accordance with one embodiment of this invention, and diagrammatically illustrating a low power scan pattern;
Fig. 1b is a perspective view of the hand-held laser scanner unit of Figure 1a, coupled to the terminal unit in accordance with one embodiment of this invention, and diagrammatically illustrating a high power scan pattern;
Fig. 2 is a perspective view of the hand-held laser scanner unit of Figures 1a and 1b used remotely from the terminal unit in accordance with this invention;
Fig. 3 is a diagrammatic cut-away illustration of the hand-held laser scanner according to the embodiment of the present invention of Figure 2; and
Fig. 4 is an electrical diagram in block form of the hand-held laser scanner and the associated terminal according to one embodiment of the present invention.

### DETAILED DESCRIPTION OF SPECIFIC EMBODIMENT

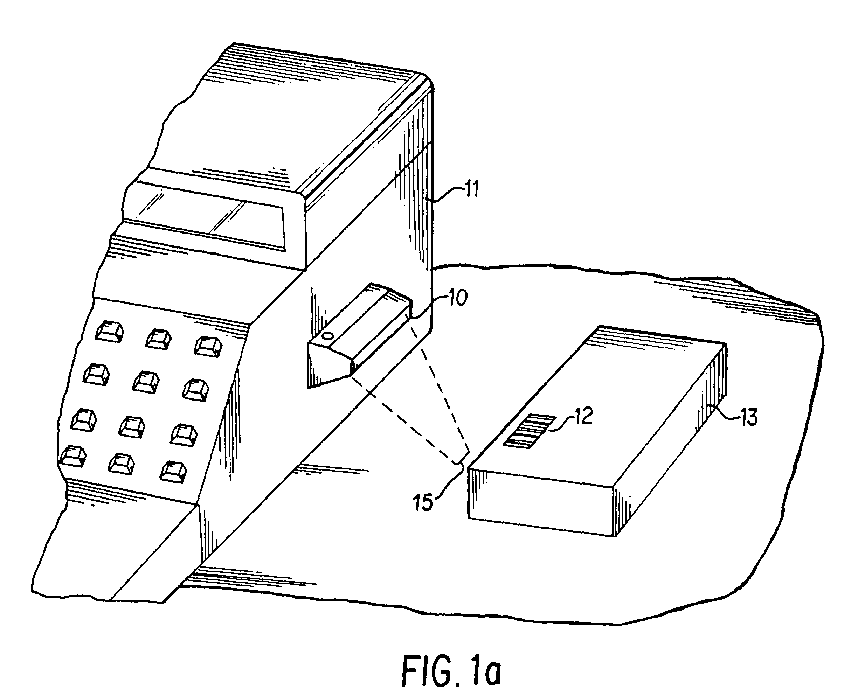

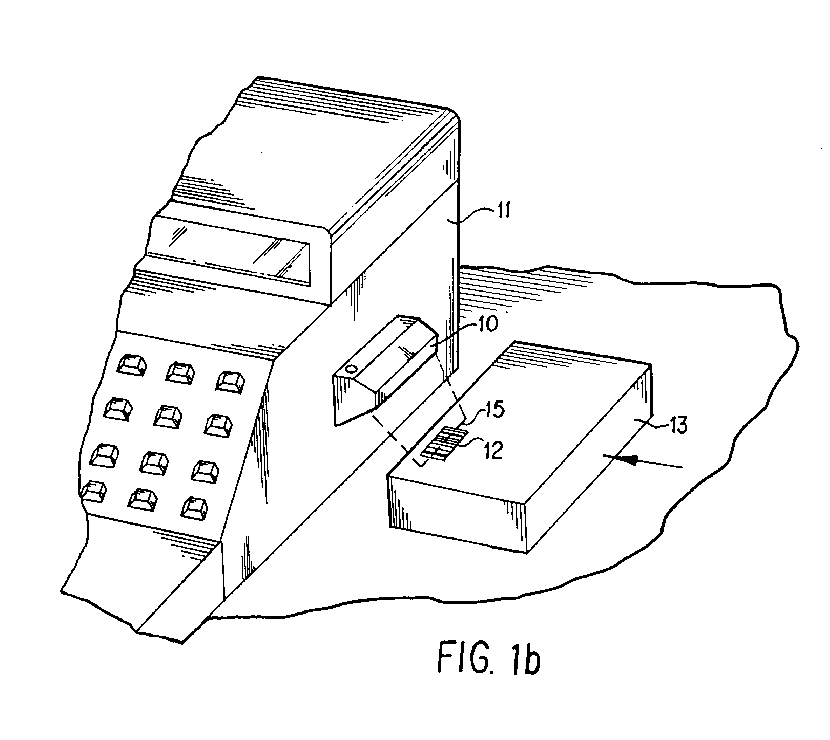

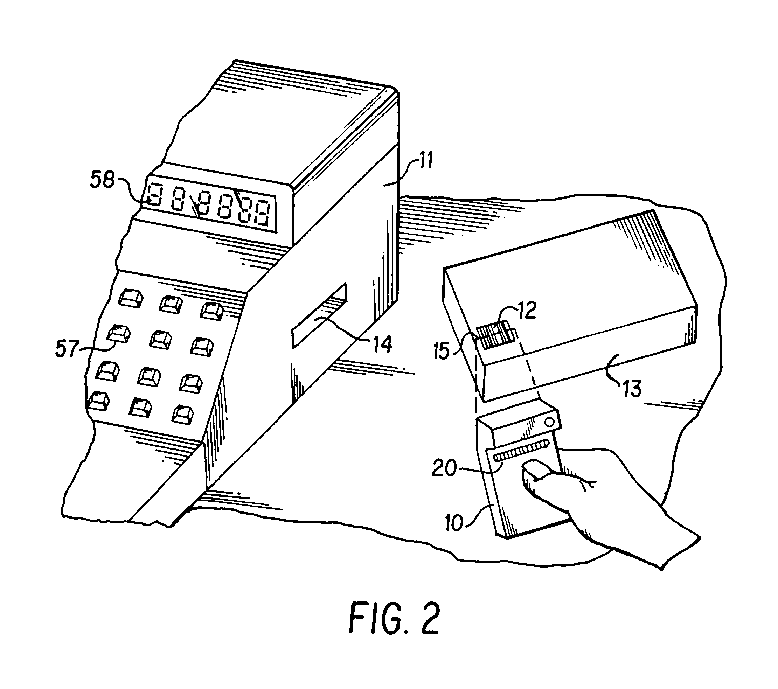

A bar code scanner according to one embodiment of the invention is illustrated in Figures 1a and 1b, where a removable hand-held scanner 10 is shown inserted in a terminal 11 for reading a bar code 12 on the surface of an article 13. The scanner 10 is constructed so that it has two modes of operation, one where it is inserted in a slot 14 in the terminal 11, and another where the scanner 10 is removed from the slot 14 and held by hand as illustrated in Figure 2. Further, while the scanner 10 is in the mode of Figures 1a and 1b, the laser scan has a low-power scanning mode in which the scan line 15 is short (and therefore brighter) and the current driving the laser is reduced, as in the Figure 1a condition. When an object resembling a bar code is moved into the field of the scan as illustrated in Figure 1b, the signal detected is adequate to be recognized as a bar-code type output, and this output is used to trigger a switch to the high-power mode wherein the drive to the laser is increased and the scan line 15 is made longer, so that a complete scan and decode can be done rapidly. By using this dual-mode scan, the lifetime of the laser diode used to generate the laser scan line 15 is increased, as the laser will be driven at a low-power condition for most of its operating life.

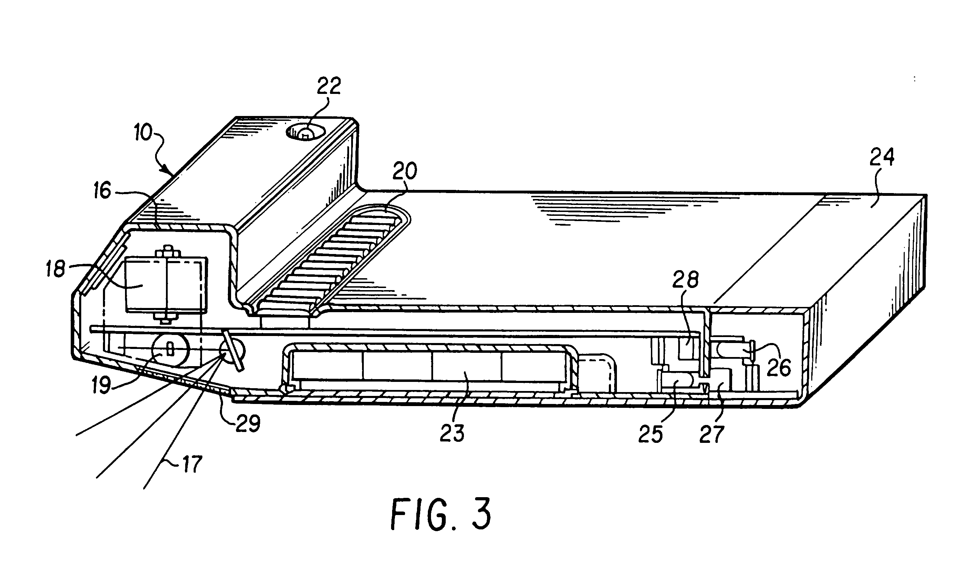

The portable scanner 10 is shown in cut-away view in Fig. 3 and includes a housing 16 with a mechanism in the housing for generating a light beam 17 and transmitting the light beam toward each symbol to be read; in a preferred embodiment, a motor 18 is used to oscillate an optical element 19 which directs the path of a laser beam. Also, a photodetector element is included for receiving reflected light from a symbol 12. While in the hand-held operating mode of Figure 2, the scan is activated by a pushbutton switch 20 (trigger bar) located on the upper part of the housing 16, so there is no need for the dual power level mode of operation to save laser life. That is, when the pushbutton switch 20 is pressed by the operator, the laser scan is initiated at full power to generate a scan line 15 to traverse the bar code symbol 12 to be read. If a recognizable bar code is decoded by the electrical circuitry as will be described, an indicator light 22 is activated to signify to the user that the scan was successful. The housing 16 contains batteries 23 for powering the unit when in the hand-held mode, and these batteries are preferably of the miniature rechargeable lead-acid type which are commercially available; to avoid the necessity for plug-in connectors, this same power supply is used to power the hand-held unit even when it is in the stationary position in the slot 14. The batteries are recharged when the unit 10 is plugged into the terminal 11 by an open-frame transformer, so there are no wired connections between the hand-held unit and a fixed coupler 24 located at the back of the slot 14 to receive the unit 10. That is, the coupler 24 is not part of the unit 10 removed from the fixed terminal 11. Light coupling is used to transfer signals and data between the unit 10 and the terminal 11, and for this purpose two pairs of semiconductor optical couplers are included, consisting of light-emitting diodes 25 and 26 and light-responsive transistors 27 and 28. The housing 16 is composed of light-weight plastic, and has a window 29 which is transparent to the laser light beam 17.

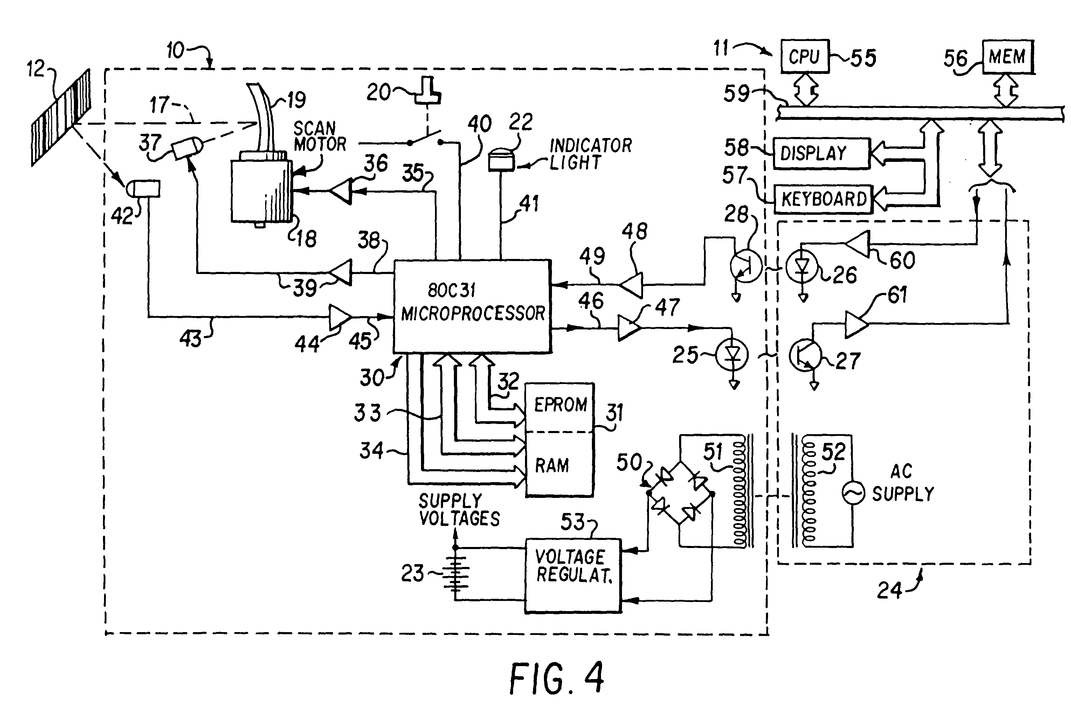

Referring to Figure 4, the circuitry included within the housing 16 of the hand-held unit 10 is shown in block diagram form. The control and data handling functions are provided by a microprocessor or microcontroller device 30 which may be, in a preferred embodiment, a 80C31 microcontroller chip manufactured by Intel. This 80C31 device is a low-power CMOS 8-bit processor containing 128-bytes of on-chip RAM, two 16-bit timer-counters, and having four 8-bit general-purpose I/O ports (32-bit I/O) which are used for accessing an off-chip memory 31. The off-chip memory 31 includes EPROM for holding the code to be executed, and RAM for temporarily storing the bar code data before the data is transferred to the terminal 11. The off-chip memory 31 is accessed by an address bus 32 and a data bus 33, along with control lines 34 for read/write and data-enable controls as may be required; these access busses are provided by the I/O ports of the microcontroller chip 30. Examples of instruction code to be stored in the EPROM for defining the operation of the controller chip are available from the manufacturer of the 80C31 device, and would include standard data-move routines for parallel and serial ports, and timer routines.

The scan motor 18 is activated by an output 35 from the microcontroller 30 and a drive circuit 36. Likewise, the laser diode 37 for generating the beam 17 is activated under control of the microcontroller 30 at an output 38, using a drive circuit 39 to increase the power level. The trigger bar or pushbutton switch 20 provides an input 40 to the microcontroller 30, and an output 41 is used to drive the indicator light 22. Each of these inputs and outputs 35, 38, 40 and 41 is provided by one of the lines of the 32-bit I/O of the microcontroller, accessed by set-bit or test-bit instructions of the code which is executed. Thus, when the pushbutton 20 is activated, this is detected by the microcontroller 30 and the laser diode 37 is energized for a time period established by the internal timer counters of the microcontroller chip; at the same time, the scanner motor 20 is activated.

Light reflected from the bar code symbol 12 is detected by a photodetector 42 to produce an analog signal on line 43 related to light level, and this analog signal is amplified and clipped by a shaping circuit 44 to produce a pulse-width modulated digital signal on line 45 which is another of the port inputs to the microcontroller 30. The digital signal is stored in internal RAM and processed to determine whether or not a recognizable bar code is present, and if so, the start and stop codes usually present are found in the digital signal and the characters are separated out and stored in the RAM portion of the memory 31.

To transfer data and commands to and from the terminal 11, the hand-held unit 10 contains the light-emitting diode 25 and light-responsive transistor 28 as mentioned above. The diode 25 is activated by an output 46 from the microcontroller 30 along with a drive circuit 47 which increases the power level of the drive signal. Thus, data from the memory 31 representing valid bar code characters detected by the scan operation is transferred to the terminal 11 by digital pulses generated in the microcontroller 30 and applied to the output port line 46. Input signals from the phototransistor 28 are shaped in circuitry 48 and applied as digital data to an input port line 49 to the microcontroller 30. In this manner, when the hand-held unit 10 is plugged into the slot 14 of the terminal 11, the microcontroller 30 can detect that the unit is in the mode of Figures 1a and 1b by command signals from the terminal 11 via phototransistor 28 and input 49, and so the microcontroller 30 will enter a routine whereby any data collected by bar code scans and stored in the memory 31 will be transferred to the terminal 11 via output 46 and light-emitting diode 25. Thereafter, so long as the hand-held unit stays in the slot 14, the microcontroller monitors the "stationary" command received at input 49 and goes into the two-level scan mode described above, and disables the pushbutton switch 20. Whenever the "stationary" command is no longer received at input 49, this means the hand-held unit 10 is no longer in the slot 14, so the microcontroller 30 returns to the mode whereby the pushbutton switch 20 must be pushed to begin a scan.

The batteries 23 are charged by a full-wave bridge rectifier 50 which has its input connected to a secondary winding 51 of a transformer which is open-frame coupled to a primary winding 52 located in the fixed-mounted unit 24 of the terminal 11. That is, the primary and secondary of this transformer are located close enough together when the hand-held unit 11 is in the slot 14 so that sufficient coupling is provided to transfer AC power to the secondary winding 51. The output of the rectifier 50 is connected by a voltage regulator 53 to the batteries 23, and the voltage across the batteries is used as the supply voltage to the microcontroller 30, memory 31, motor 18 and other elements of the circuitry within the hand-held unit.

Within the terminal 11, a processor 55, which may be of the 8088 type, for example, is used to control the operations and data transfers to and from a memory 56. The keyboard 57 and display 58 of the fixed terminal are also driven by this processor. The light-emitting diode 26 and the phototransistor 27 are driven or accessed by the main bus 59 of the processor 55 via shaping or drive circuits 60 and 61, using memory-mapped I/O accesses, for example.

While this invention has been described with reference to a specific embodiment, this description is not meant to be construed in a limiting sense. Various modifications of the disclosed embodiment, as well as other embodiments of the invention, will be apparent to persons skilled in the art upon reference to this description. It is therefore contemplated that the appended claims will cover any such modifications or embodiments as fall within the true scope of the invention.

## Claims

1. A system for reading bar code symbols (12) or the like, comprising:
(a) a flat hand-held scanning unit (10) in a portable housing, including
symbol-detection means (18, 19, 37, 42)
for generating a laser beam (17) directed toward a symbol (12) to be read, and
for receiving reflected light from such symbol (12) to produce electrical signals (43) corresponding to data represented by the symbol;
means (31) for storing said data represented by the symbol (12);
data transfer means (25, 28) for transferring the data represented by the symbol (12) externally of said scanning unit (10) and for receiving data;
a trigger switch (20) located on the housing for initiating reading of the symbol (12) upon each manual actuation of the switch (20) by the user; and
a rechargeable power supply (23) for supplying electrical power to said scanning unit (10); and
(b) a terminal (11) including
a housing having a slot (14) adapted to receive said scanning unit (10),
means (26, 27) in said slot (14) for transferring data to or from the data transfer means (25, 28) of said scanning unit (10) when said scanning unit is placed in said slot; and
means (52) in said slot (14) for transferring power to said scanning unit (10) for recharging said recharge-able power supply (23) of said scanning unit (10) when said scanning unit is placed in said slot; and
(c) means (56, 58) for displaying and/or storing the data transferred from said scanning unit (10).

2. A system as defined in claim 1 wherein said symbol-detection means (18,19,37,42) includes scanning means for repetitively scanning said laser beam (17) over at least a portion of a symbol (12) to be read.

3. A system as defined in claim 2 wherein said symbol-detection means includes photodetector means (42) for detecting at least a portion of the light having variable intensity of each scanned laser beam (17) reflected from each symbol (12).

4. A system as defined in any of the preceding claims wherein said scanning unit (10) includes means responsive to successful recognition of a symbol (12) to be read to terminate actuation of the symbol-detection means (18,19,37,42).

5. A system as defined in any of the preceding claims, wherein said scanning unit (10) includes means for indicating a successful decoding of a symbol (12) to be read.

6. A system as defined in any of the preceding claims, wherein said terminal (11) comprises object sensor means to detect when an object (13) bearing a bar code label (12) is moved into the field of view (15) of said symbol-detection means (18,19,37,42) of said scanning unit (10) when said scanning unit (10) is seated in said slot (14).

7. A system as defined in any of the preceding claims, wherein said scanning unit (10) has a first scanning mode which is a low power standby mode, and a second scanning mode which is high power reading mode.

8. A system as defined in claim 7, wherein in said first scanning mode said laser beam (17) traces a scanning line having a first length in a reference plane lying generally normal to the optical path of said laser beam, and in said second scanning mode said laser beam (17) traces a scanning line having a second length greater than said first length.

9. A system as defined in any of the preceding claims, wherein said data transfer means (25-28) provides wireless transmission of data to said terminal (11).

10. A system as defined in any of the preceding claims, wherein said scanning unit (10) is activated when an object having a reflected light characteristic that could be indicative of the presence of a symbol is detected.

11. A system as defined in any of the preceding claims, wherein said scanning unit (10) is operative in a hand-held mode supported by a user for reading symbols, and in data transfer mode, said scanning unit (10) including local data storage means (31) in said portable housing for storing the data; and wherein said terminal (11) is located remotely from the scanning unit (10) when the scanning unit is used in the hand-held mode, and wherein said terminal (11) is coupled to and supporting the scanning unit (10) when the scanning unit is in the data transfer mode, said terminal (11) including main data storage means (56), and means for receiving and supporting the scanning unit (10) on the terminal (11) in the data transfer mode, said receiving and supporting means including said data transfer means (26,27) for transferring the data stored in the local data storage means (31) to the main data storage means (56) in the terminal (11), and means for actuating the recharge means and supplying power to recharge the rechargeable power supply (23) in said scanning unit.

12. A system as defined in claim 11, wherein said means for actuating the recharge means is responsive to said scanning unit (10) being mounted on the terminal (11).

13. A system as defined in any of the preceding claims, wherein said recharge means comprises an induction coil (52) for transferring power to said scanning unit by induction.

14. A system as defined in claim 11, wherein said data transfer means (25-28) comprises a light emitting diode (25) for wireless transmission of the data to said main data storage means (56).

15. A system as defined in claim 11, wherein said terminal (11) includes a base portion on which said terminal is seated, and said means for receiving and supporting the scanning unit functions to direct the light beam (17) emitted from said scanning unit in the data transfer mode to a reference plane adjacent to said base portion.

## Patentansprüche

1. System zum Lesen von Strichcodesymbolen (12) oder dergleichen, wobei Folgendes vorgesehen ist:
(a) eine flache, in der Hand zu haltende Abtasteinheit (10) in einem tragbaren Gehäuse einschließlich
Symboldetektiermitteln (18, 19, 37,42) zur Erzeugung eines Laserstrahls (17) gerichtet auf ein zu lesendes Symbol (12) und zum Empfang von reflektiertem Licht von einem solchen Symbol (12) zur Erzeugung elektrischer Signale (43) entsprechend dem durch das Symbol repräsentierten Daten;
Mittel (31) zum Speichern der durch das Symbol (12) repräsentierten Daten;
Datentransfermittel (25, 28) zum Transfer der durch das Symbol (12) repräsentierten Daten extern gegenüber der Abtasteinheit (10) und zum Empfangen von Daten;
einen Auslöserschalter (12) angeordnet am Gehäuse zum Initiieren des Lesens des Symbols (12) bei jeder manuellen Betätigung des Schalters (20) durch den Benutzer; und
eine wiederaufladbare Leistungsversorgung (23) zum Liefern von elektrischer Leistung an die Abtasteinheit (10); und
(b) einen Terminal (11) einschließlich
einem Gehäuse mit einem Schlitz (14) angepaßt zur Aufnahme der erwähnten Abtasteinheit (10),
Mittel (26, 27) in dem Schlitz (14) zum Transfer oder der Übertragung von Daten zu oder von den Datentransfermitteln (25, 28) der Abtasteinheit (10), wenn die Abtasteinheit in dem Schlitz angeordnet ist;
Mittel (52) in dem Schlitz (14) zum Übertragen von Leistung zu der Abtasteinheit (10) zum Wiederaufladen der wiederaufladbaren Leistungsversorgung (23) der Abtasteinheit (10), wenn die Abtasteinheit in dem Schlitz angeordnet ist;
(c) Mittel (56, 58) zum Anzeigen und/oder Speichern der von der Abtasteinheit (10) übertragenen Daten.

2. System nach Anspruch 1, wobei die Symboldetektiermittel (18, 19, 37, 42) Abtastmittel aufweisen zum wiederholten Abtasten des Laserstrahls (17) über mindestens einen Teil eines zu lesenden Symbols (12).

3. System nach Anspruch 2, wobei die Symboldetektiermittel Photodetektormittel (42) aufweisen zum Detektieren von mindestens einem Teil des Lichtes mit variabler Intensität jedes von jedem Symbol (12) reflektierten getasteten Laserstrahls (17).

4. System nach einem der vorhergehenden Ansprüche, wobei die Abtasteinheit (10) Mittel aufweist, die auf die erfolgreiche Erkennung eines einzulesenden Symbols (12) ansprechen, um die Betätigung des Symboldetektiermittel (18, 19, 37, 42) zu beenden.

5. System nach einem der vorhergehenden Ansprüche, wobei die Abtasteinheit (10) Mittel aufweist zur Anzeige einer erfolgreichen Decodierung eines zu lesenden Symbols (12).

6. System nach einem der vorhergehenden Ansprüche, wobei das Terminal (11) Objektsensormittel aufweist zum Detektieren, wann ein Objekt (13), welches ein Strichcodeetikett (12) trägt, in das Gesichtsfeld (15) der Symboldetektiermittel (18, 19, 37, 42) der Abtasteinheit (10) bewegt wird, wenn die Abtasteinheit (10) in dem erwähnten Schlitz (14) sitzt.

7. System nach einem der vorhergehenden Ansprüche, wobei die Abtasteinheit (10) eine erste Abtastbetriebsart besitzt, die eine Standby-Betriebsart mit niedriger Leistung ist und eine zweite Abtastbetriebsart, die eine Lesebetriebsart mit hoher Leistung ist.

8. System nach Anspruch 7, wobei in der ersten Abtastbetriebsart der Laserstrahl (17) eine Abtastlinie oder Zeile mit einer ersten Länge in einer Bezugsebene im Allgemeinen senkrecht zum optischen Pfad des Laserbeams liegend durchläuft oder verfolgt, und wobei in der erwähnten zweiten Abtastbetriebsart der Laserstrahl (17) eine Abtastlinie durchläuft, die eine zweite Länge größer als die erste Länge besitzt.

9. System nach einem der vorhergehenden Ansprüche, wobei die Datenübertragungs- oder Transfermittel (25 - 28) eine drahtlose Übertragung der Daten zu dem Terminal (11) vorsehen.

10. System nach einem der vorhergehenden Ansprüche, wobei die Abtasteinheit (10) dann aktiviert wird, wenn ein Objekt mit einer reflekten Lichtcharakteristik das Vorhandensein eines Symbols anzeigen könnte, detektiert wird.

11. System nach einem der vorhergehenden Ansprüche, wobei die Abtasteinheit (10) in einer in der Hand gehaltenen Betriebsart, getragen von einem Benutzer zum Lesen von Symbolen, in Betrieb ist und in einer Datenübertragungsbetriebsart und wobei die Abtasteinheit (10) Folgendes aufweist:
örtliche Datenspeichermittel (31) in dem tragbaren Gehäuse zum Speichern der Daten; und
wobei das Terminal (11) entfernt von der Abtasteinheit (10) angeordnet ist, wenn die Abtasteinheit in der in der Hand zu tragenden Betriebsart betrieben wird, wobei das Terminal (11) mit der Abtasteinheit (10) gekoppelt ist und diese trägt, wenn die Abtasteinheit in der Datenübertragungsbetriebsart ist, wobei das Terminal (11) Hauptdatenspeichermittel (56) und Mittel zum Empfang und zum Tragen der Abtasteinheit (10) auf dem Terminal (11) in der Datentransferbetriebsart aufweist, wobei die Empfangs- und Tragmittel Folgendes aufweisen: die erwähnten Datentransfermittel (26, 237) zum Transferieren oder Übertragen der in den örtlichen Datenspeichermitteln (31) gespeicherten Daten zu den Hauptdatenspeichermitteln (56) in Terminal (11) und Mittel zur Betätigung der Auflademittel zum Liefern von Leistung zum Wiederaufladen der wiederaufladbaren Leistungsversorgung (23) in der Abtasteinheit.

12. System nach Anspruch 11, wobei die Mittel zur Betätigung der Wiederaufladmittel darauf ansprechen, dass die Abtasteinheit (10) an dem Terminal (11) angebracht ist.

13. System nach einem der vorhergehenden Ansprüche, wobei die Wiederauflademittel eine Induktionsspule (52) aufweisen zum Transfer von Leistung zu der Abtasteinheit durch Induktion.

14. System nach Anspruch 11, wobei die Datenübertragungsmittel (25 - 28) eine Licht emittierende Diode (25) aufweisen zur drahtlosen Übertragung der Daten zu den Hauptdatenspeichermitteln (56).

15. System nach Anspruch 11, wobei das Terminal (11) einen Basisteil aufweist, auf dem das Terminal sitzt, wobei die erwähnten Mittel zum Empfang und zum Tragen der Abtasteinheit arbeiten, dass sie den Lichtstrahl (17) emittiert von der Abtasteinheit in der Datentransferbetriebsart zu einer Bezugsebene benachbart zum Basisteil leiten.

## Revendications

1. Système pour la lecture de symboles (12) de codes à barres ou analogues, comportant :
(a) une unité plate (10) de balayage tenue à la main dans un boîtier portatif, comprenant
des moyens (18, 19, 37, 42) de détection de symboles destinés
à générer un faisceau laser (17) dirigé vers un symbole (12) devant être lu, et
à recevoir une lumière réfléchie provenant de ce symbole (12) pour produire des signaux électriques (43) correspondant à des données représentées par le symbole ;
des moyens (31) destinés à trier lesdites données représentées par le symbole (12) ;
des moyens (25, 28) de transfert de données destinés à transférer les données représentées par le symbole (12) à l'extérieur de ladite unité de balayage (10) et à recevoir des données ;
un interrupteur (20) détente situé sur le boîtier pour déclencher la lecture du symbole (12) lors de chaque activation manuelle de l'interrupteur (20) par l'utilisateur ; et
une alimentation en énergie rechargeable (23) destinée à alimenter en énergie électrique ladite unité de balayage (10) ; et
(b) un terminal (11) comprenant
un boîtier ayant une fente (14) conçue pour recevoir ladite unité de balayage (10),
des moyens (26, 27) situés dans ladite fente (14) pour transférer des données vers les, ou à partir des, moyens (25, 28) de transfert de données de ladite unité de balayage (10) lorsque ladite unité de balayage est placée dans ladite fente ; et
des moyens (52) situés dans ladite fente (14) pour transférer de l'énergie à ladite unité de balayage (10) afin de recharger ladite alimentation en énergie rechargeable (23) de ladite unité de balayage (10) lorsque ladite unité de balayage est placée dans ladite fente ; et
(c) des moyens (56, 58) destinés à afficher et/ou stocker les données transférées depuis ladite unité de balayage (10).

2. Système selon la revendication 1, dans lequel lesdits moyens (18, 19, 37, 42) de détection de symboles comprennent des moyens de balayage destinés à animer ledit faisceau laser (17) d'un mouvement de balayage répétitif sur au moins une partie d'un symbole (12) devant être lu.

3. Système selon la revendication 2, dans lequel lesdits moyens de détection de symboles comprennent un moyen à photodétecteur (42) destiné à détecter au moins une partie de la lumière ayant une intensité variable de chaque faisceau laser (17) en balayage revenant par réflexion de chaque symbole (12).

4. Système selon l'une quelconque des revendications précédentes, dans lequel ladite unité de balayage (10) comprend des moyens qui, en réponse à une reconnaissance réussie d'un symbole (12) devant être lu, sont destinés à arrêter l'actionnement des moyens (18, 19, 37, 42) de détection de symboles.

5. Système selon l'une quelconque des revendications précédentes, dans lequel ladite unité de balayage (10) comprend des moyens destinés à indiquer un décodage réussi d'un symbole (12) devant être lu.

6. Système selon l'une quelconque des revendications précédentes, dans lequel ledit terminal (11) comporte un moyen à capteur d'objet destiné à détecter lorsqu'un objet (13) portant une étiquette (12) à code à barre est amené dans le champ de visée (15) desdits moyens (18, 19, 37, 42) de détection de symboles de ladite unité de balayage (10) lorsque ladite unité de balayage (10) est logée dans ladite fente (14).

7. Système selon l'une quelconque des revendications précédentes, dans lequel ladite unité de balayage (10) possède un premier mode de balayage qui est un mode d'attente à basse puissance, et un second mode de balayage qui est mode de lecture à haute puissance.

8. Système selon la revendication 7, dans lequel, dans ledit premier mode de balayage, ledit faisceau laser (17) suit une ligne de balayage ayant une première longueur dans un plan de référence s'étendant à peu près perpendiculairement au chemin optique dudit faisceau laser et, dans ledit second mode de balayage, ledit faisceau laser (17) suit une ligne de balayage ayant une seconde longueur supérieure à ladite première longueur.

9. Système selon l'une quelconque des revendications précédentes, dans lequel lesdits moyens (25, 28) de transfert de données réalisent une transmission sans fil de données audit terminal (11).

10. Système selon l'une quelconque des revendications précédentes, dans lequel ladite unité de balayage (10) est activée lorsqu'un objet ayant une caractéristique de lumière réfléchie qui pourrait indiquer la présence d'un symbole est détecté.

11. Système selon l'une quelconque des revendications précédentes, dans lequel ladite unité de balayage (10) est mise en oeuvre dans un mode tenu à la main par un utilisateur pour la lecture de symboles, et dans un mode de transfert de données, ladite unité de balayage (10) comprenant
un moyen local (31) de stockage de données dans ledit boîtier portatif pour stocker les données ; et
dans lequel ledit terminal (11) est placé à distance de l'unité de balayage (10) lorsque l'unité de balayage est utilisée dans un mode tenu à la main, et dans lequel ledit terminal (11) est couplé à, et supporte, l'unité de balayage (10) lorsque l'unité de balayage est dans le mode de transfert de données, ledit terminal (11) comprenant
un moyen principal (56) de stockage de données, et
un moyen destiné à recevoir et supporter l'unité de balayage (10) sur le terminal (11) dans le mode de transfert de données, ledit moyen de réception et de support comprenant
ledit moyen (26, 27) de transfert de données destiné à transférer les données stockées dans le moyen local (31) de stockage de données vers le moyen principal (56) de stockage de données dans le terminal (11), et
un moyen destiné à actionner le moyen de recharge et à réaliser une alimentation en énergie pour recharger l'alimentation en énergie rechargeable (23) dans ladite unité de balayage.

12. Système selon la revendication 11, dans lequel ledit moyen destiné à actionner le moyen de recharge réagit au montage de ladite unité de balayage (10) sur le terminal (11).

13. Système selon l'une quelconque des revendications précédentes, dans lequel ledit moyen de recharge comporte une bobine d'induction (52) destinée à transmettre par induction de l'énergie à ladite unité de balayage.

14. Système selon la revendication 11, dans lequel lesdits moyens (25, 28) de transfert de données comprennent une diode émettrice de lumière (25) pour une transmission sans fil des données audit moyen principal (56) de stockage de données.

15. Système selon la revendication 11, dans lequel ledit terminal (11) comprend une partie de base sur laquelle ledit terminal repose, et ledit moyen destiné à recevoir et supporter l'unité de balayage fonctionne de façon à diriger le faisceau lumineux (17) émis depuis ladite unité de balayage dans le mode de transfert de données vers un plan de référence adjacent à ladite partie de base.
